# EUROPEAN PATENT SPECIFICATION

(11) **EP 3 105 478 B1**
(45) Date of publication and mention of the grant of the patent: **24.04.2019**
(21) Application number: 15749518.5
(22) Date of filing: 09.02.2015
(51) Int. Cl.: F16J 15/34, F16J 15/38, F16J 15/44, F16J 15/00

(54) **FACE SEAL**
GLEITRINGDICHTUNG
JOINT D'ÉTANCHÉITÉ FACIAL

(30) Priority: 13.02.2014 SE 1450167
(43) Date of publication of application: 21.12.2016
(73) Proprietor: Scania CV AB, 151 87 Södertälje (SE)
(72) Inventor: BARTOS, Elias, S-117 28 Stockholm (SE); RYBÄCK, Petter, S-152 57 Södertälje (SE)
(74) Representative: Scania CV AB
(86) International application number: PCT/SE2015/050146
(87) International publication number: WO 2015/122829

(56) References cited:
- EP-A1- 1 536 167
- EP-A2- 1 024 319
- EP-A2- 1 357 319
- EP-A2- 1 357 319
- WO-A1-2008/136757
- WO-A1-2010/098704
- US-A1- 2003 178 780
- US-A1- 2009 096 175

## Description

### BACKGROUND OF THE INVENTION AND PRIOR ART

The present invention relates to a face seal according to the preamble of claim 1.

Units such as pumps, turbines, hydrodynamic retarders etc. often comprise a house with a through rotatable shaft. The rotatable shaft may be equipped with shovels or similar components to convert mechanical energy into pressure energy in a medium or vice versa. It is prior art to apply a face seal in the space between a through hole in the house and the rotatable shaft, to prevent leaking of the pressurised medium from the house. Such a face seal may comprise a stationary part, which is fixed in the house, and a rotatable part fixed to the rotating shaft. Said parts each have a sealing element comprising flat surfaces, abutting against each other in a plane perpendicular to the rotatable shaft. The sealing elements' ability to provide a good sealing is contingent on the sealing surfaces being formed with a good accuracy. A face seal's ability to provide a good sealing is also contingent on the pressure load, i.e. the difference in pressure between the media on opposite sides of the sealing surfaces. If the pressure difference is great, the face seal's solidity is reduced.

In units of the type mentioned above, with a high internal pressure, prior art such as US 2003/0178780 A1 arranges several separate face seals after each other to provide sealing between the house and the rotatable shaft. With such a solution, the pressure may be reduced in several steps, and accordingly the pressure load may be reduced in the individual face seals. Since there are high demands on the design of the sealing surfaces, face seals are expensive. They also require a relatively large mounting space. Accordingly, there are disadvantages associated with using several separate face seals. In a sealing context, it is also prior art to use separate pressure relieving components combined with face seals, to reduce the pressure load on the face seal. A space consuming construction is required in this case as well.

### SUMMARY OF THE INVENTION

The objective of the present invention is to provide a face seal with a compact design, providing a good sealing of a radial space where a rotatable shaft extends into a house, in which a higher pressure prevails than in an area outside the house.

This objective is achieved with the face seal of the type specified at the beginning, which is characterised by the features specified in the characterising portion of claim 1. Face seals thus comprise a pressure relieving device, which is adapted to be arranged in the second part of the radial space and to create a zone therein in connection with said sealing element, in which zone a lower pressure prevails than in the first internal area of the house, where the pressure may be very high. With such a pressure relieving device, the pressure load on the sealing element may be markedly reduced. The face seal may thus provide a good sealing, also on occasions when the pressure in the first internal space of the house is very high. Since the pressure relieving device is comprised in the face seal, it may be designated as an integrated part of the face seal. A face seal comprising a pressure relieving device with a suitable construction requires only a small extra space in relation to the space required by a conventional face seal. Such a face seal has a compact design, while at the same time providing provides a good sealing, also when a high pressure prevails in said first internal area of the house.

According to one embodiment of the present invention, the pressure relieving device is comprised in the rotatable part of the face seal. The rotatable part of the face seal is usually fitted further inside the house than the static part of the face seal. For this reason, it is suitable to arrange the pressure relieving device in the part of the face seal, which is arranged in connection with the pressurised second part of the radial space. Alternatively, the static part of the face seal may be fitted further inside the house than the rotatable part of the face seal. In this case, the pressure relieving device is arranged on the static part of the face seal.

According to one embodiment of the present invention the pressure relieving device comprises a pressure relief ring, arranged in an annular recess of the face seal. A pressure relieving device comprising such components requires very little mounting space. The pressure relief ring may comprise a surface, which is adapted to abut with a pressure against a wall surface of the annular recess, so that a passage wherein a medium provides a pressure fall is created between said surfaces. The pressure acting on the surfaces may be created by the pressure difference in the medium on opposite sides of the pressure relieving device. The pressure relief ring may have a radial external surface, adapted to abut with a pressure against the internal surface defining the through hole in the house, and a radial internal surface adapted to be located at a distance from a bottom surface of the radial recess. In this case, the pressure relief ring will be kept in a non-rotating state by the stationary internal surface, while the surfaces of the radial recess rotate with the rotatable shaft.

According to one embodiment of the present invention, the pressure relief ring is pre-fitted in the annular recess. The face seal and the pressure relieving device may in such case be fitted as one cohesive unit in said space. The pressure relief ring is advantageously made of a rigid material. The pressure relief ring may, for example, be made of bearing bronze, brass, rigid plastic or a nylon material. The annular recess is advantageously also arranged in a body made of a rigid material, such as a suitable metal material. When the pressure relief ring's surfaces and the surfaces which define the annular recess are made of rigid materials, they keep their shape when pressed against each other. Thus, bumps and other irregularities in the surfaces form narrow passages in connection with the surfaces, through which a medium may pass. The medium experiences a pressure fall, however, when it passes through the narrow passages.

According to one embodiment of the present invention, one of the face seal parts comprises a moveably arranged sealing element, and a spring element adapted to press the sealing element against the sealing element in the remaining part of the face seal. With such a spring element, the sealing elements are held together with a spring force, ensuring that they always abut tightly against each other in an optimal manner, so that leakages are avoided.

According to one embodiment of the present invention, said face seal part comprises a sealing element that prevents leakages in connection with the moveably arranged sealing element. Column shaped passages unavoidably occur between a moveably arranged sealing element and the surrounding surfaces. By arranging a sealing element, such as an O-ring, in a suitable position in connection with the moveably arranged sealing element, leakages through such a passage may be prevented.

According to one embodiment of the present invention one of the face seals comprises parts of a fixing material for attachment of the sealing element. With such an attachment, no column shaped passages are created, through which a medium may leak through the sealing element. The sealing element is advantageously kept in a suitable position with a fixing material having certain elastic characteristics. Accordingly, the sealing element has a certain mobility, ensuring that it may always substantially be made to abut tightly against the second sealing element. Suitably, one of the sealing elements is moveable, and the second sealing element is attached with a suitable fixing material.

The present invention also relates to a unit comprising a house, a rotatable shaft extending through a hole in the house, and a radial area between the rotatable shaft and an internal area defining the through hole in the house, which through hole extends between an area located outside of the house and a first area located inside the house, where a higher pressure prevails than in the outside area. Said radial area comprises a face seal according to any of the previous embodiments. The unit may be a pump, a turbine, a hydraulic retarder or another type of unit, wherein a large internal pressure may be created at least locally, in connection with an area where a rotatable shaft extends inside a house of the unit.

According to one embodiment of the present invention, the unit comprises a passage, which is adapted to connect said zone, arranged in connection with said sealing element, with a second internal area of the house, where a lower pressure prevails than in the first internal area. Accordingly, the medium led past the pressure relieving unit and reaching said zone, may be led back to an internal area with a low pressure in the house. In this case, the pressure in the second internal area of the house defines the pressure prevailing in said zone. Suitably, the pressure in the second internal area of the house corresponds substantially to the pressure prevailing in the external area of the house.

### BRIEF DESCRIPTION OF THE DRAWINGS

Below is a description, as an example, of a preferred embodiment of the invention with reference to the enclosed drawing, on which:
- Fig. 1: shows a face seal, comprising pressure relieving units according to the present invention and
- Fig. 2: shows an area of the face seal in more detail, comprising one of the pressure reliving units.

### DETAILED DESCRIPTION OF A PREFERRED EMBODIMENT OF THE INVENTION

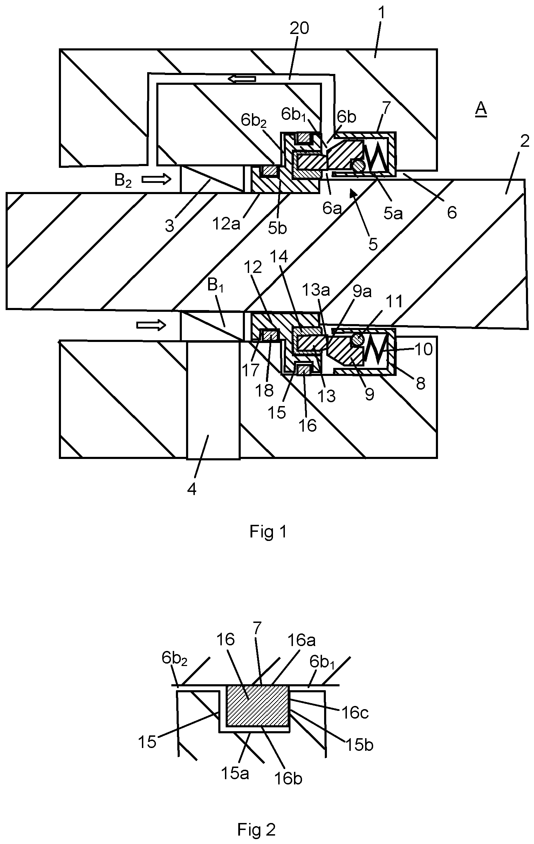

Fig. 1 shows a part of a house 1 in a unit, which in this case is exemplified as a pump adapted to circulate a liquid medium inside a conduit circuit. A rotatable shaft 2 extends into the house 1, via a through hole in a wall of the house 1. The rotatable shaft 2 is operated by a non-displayed driving source, arranged outside of the house 1. The house 1 is surrounded by an external area A, consisting of air with atmospheric pressure. The rotatable shaft 2 is equipped with shovels 3 or similar components inside the house 1, with which the liquid medium is pressurised in a first interior area B₁ of the house 1. The liquid medium may, with the help of the shovels 3, provide a relatively high pressure in the first internal area B₁ of the house 1. When the shaft 2 with the shovels rotates, the liquid medium is sucked to the first internal area B₁ from a second internal area B₂ of the house 1, where it has a significantly lower pressure. The pressurised liquid medium in the first internal area B₁ is led out to a channel 4 of said conduit circuit.

A face seal 5 is arranged in a radial area 6, located between the rotatable shaft 2 and an internal area 7, which defines the through hole in the house 1. The face seal 5 is arranged in a part of the radial area 6, where this has a locally increased width. The internal surface 7 is here located at a relatively large distance from the peripheral surface of the shaft 2. The face seal 5 comprises a first static part 5a and a second rotatable part 5b. The static part 5a comprises an attachment element 8, which is attached to the internal area 7. The attachment element 8 comprises a recess, which encloses a first annular sealing element 9, comprising a first face sealing surface 9a. The attachment recess of the element 8 also encloses a spring element 10, charging the sealing element 9 with a spring force, and a seal that may be an O-ring 11. The rotatable part 5b comprises an attachment element in the form of a lathe dog 12, which is attached to a peripheral surface of the shaft 2. The rotatable part 5b of the face seal thus rotates with the shaft 2. The lathe dog 12 comprises a recess where a second annular sealing element 13 is attached, with the help of an attachment material 14 that may have elastic characteristics.

The second sealing element 13 comprises a second face sealing surface 13a, which is adapted to abut against the first face sealing surface 9a of the first sealing element 9. The first face sealing surface 9a is pressed against the second face sealing surface 13a with the help of the spring element 10. Since the sealing surfaces 9a, 13a are manufactured with a very great fineness, a tight connection is created between the face sealing surfaces 9a, 13a. The tight connection between the face sealing surfaces 9a, 13a partitions the radial area 6 between the rotatable shaft 2 and the internal surface 7 into a first part 6a, containing air with atmospheric pressure, and in a second part 6b, containing the liquid medium. The second part 6b of the area extends from the sealing elements 9, 13 and into the house 1 to the first internal area B₁, where the liquid medium is pressurised by the shovels 3. The lathe dog 12 comprises a first annular peripheral recess 15, which is equipped with a first pressure relieving ring 16, and a second annual peripheral recess 17, which is equipped with a second pressure relieving ring 18. The lathe dog 12 and the pressure relieving rings 16, 18 are made of rigid materials.

Fig. 2 shows the first peripheral recess 15 and the first pressure relieving ring 16 in more detail. The pressure relieving ring 16 has, in this case, a rectangular cross section in an axial plane. The pressure relief ring 16 has a radial external surface 16a, abutting with a force against the internal surface 7, defining the through hole in the house 1, and a radially internal surface 16b, located at a column shaped distance from a bottom surface 15a of the recess 15. Accordingly, the pressure relieving ring 16 will not rotate with the shaft 2. The high pressure in the first internal area B₁ of the house 1 results in the pressure relief ring 16 being subjected to a pressure, so that a front surface 16c of the pressure relief ring 16 is pressed against a front side surface 15b of the recess 15. Thus, a very narrow passage is created for the liquid medium in the area between the pressure relief ring's front surface 16c and the side surface 15b of the recess. The narrow passage may be equated with a throttle. The liquid medium may, in a limited amount, pass through the passage at the same time as it obtains a pressure fall. In connection with this, a zone 6b₁ is provided in the second part 6b of the area, in connection with the sealing elements 9, 13, where the liquid medium has a considerably lower pressure than in the first internal area B₁ of the house 1. Said zone 6b₁ of the second part 6b of the radial area is, via a passage 20, in connection with the second internal area B₂ of the house 1, wherein the liquid medium only has a smaller overpressure. The pressure in the zone 6b₁ is only somewhat higher than the pressure in the second internal area B₂ of the house 1. The first peripheral annular recess 15 and the first pressure relief ring 16 constitute a first pressure relieving unit.

The second pressure relief ring 18 in the second peripheral annular recess 17 on the lathe dog 12 has a function corresponding to that of the first pressure relief ring 16 and the first annular recess 15. Accordingly, a narrow passage is also created in connection with the second pressure relief ring 18, resulting in a pressure fall for the liquid medium. Thus, a second zone 6b₂ is provided in the second part 6b of the area, having a pressure that is higher than the pressure in the first zone 6b₁, but lower than the pressure in the first internal area B₁ of the house 1. The second peripheral annular recess 17 and the second pressure relief ring 18 constitute a second pressure relieving unit. If the liquid medium has a very high pressure in the first internal area B₁, it may be justified to have two pressure relieving devices to reduce the pressure in several steps. In most cases, however, one pressure relieving device is sufficient. The pressure relief rings 16, 18 are pre-fitted in the annular recesses 15, 17 of the lathe dog 12. Accordingly, they constitute an integral part of the rotatable part 5b of the face seal 5.

During operation, the shaft 2 rotates. The shovels 3 receive the liquid medium from the second internal area B₂ of the house. The shovels 3 pressurise the liquid medium, so that it obtains a relatively high overpressure in the first area B₁ of the house. The liquid medium is squeezed out of the first area B₁ into the channel 4. The high pressure in the first area B₁ also acts on the face seal 5, to the extent that the liquid medium having a high pressure penetrates the area 6b, between the static internal surface 7 and the rotating lathe dog 12's peripheral surface. The liquid medium reaches the second pressure relief ring 18, where it provides a pressure reduction in a first step. The liquid medium is subsequently led through the second zone 6b₂ to the first pressure relief ring 16, where it provides a pressure reduction in a second step. The liquid medium reaching the first zone 6b₁ accordingly has a pressure only marginally exceeding the liquid medium's pressure in the second internal area B₂. The liquid medium is led from the first zone 6b₁, back to the second internal area B₂, via the passage 20.

The rotatable part of the face seal 5b thus rotates in relation to the static part of the face seal 5a. The sealing surface 13a of the rotatable part 5b thus rotates in contact with the sealing surface 9a of the static part 5a. The sealing surfaces 9a, 13a, however, have a surface finish so that they abut very tightly against each other. Accordingly, substantially no liquid medium may be led from the second part 6b of the area, to the first part 6a of the area, via the sealing surfaces 9a, 13a. The O-ring 11 prevents liquid medium from being led past the moveably arranged sealing element 9. The presence of the relief rings 16, 18 means that the liquid medium in the first zone 6b₁ has a relatively low overpressure in relation to the air's pressure on the opposite side of the sealing surfaces 9a, 13a, even though the liquid medium has a large overpressure in the first internal area B₁. The face seal 5, according to the above, is therefore suitable for use as a sealant between media having large pressure differences. Since the relief rings 16, 18 are arranged in recesses on an existing lathe dog 12 of the face seal, the face seal 5 requires space substantially no larger than a face seal without pressure relieving devices.

The invention is in no way limited to the embodiment described in the drawing, but may be varied freely within the scope of the patent claims. The house 1 may, for example, be arranged in an external area A, consisting of any medium with a pressure lower than in the first internal area B₁.

## Claims

1. Face seal for sealing a radial area (6) between a rotatable shaft (2) and an internal surface (7, which defines a through hole in a house (1), wherein said radial area (6) extends from an area (A) located externally of the house (1) to a first internal area (B₁) in the house (1), where a higher pressure prevails than in the external area (A), wherein the face seal (5) comprises a static part (5a) adapted to be attached to said internal surface (7), and comprising a first sealing element (9), and a rotatable part (5b) adapted to be attached to the shaft (2), and comprising a second sealing element (13), wherein said sealing elements (9, 13) are adapted to abut against each other in a position, in which they divide said radial area (6) in a first part (6a), which is in contact with the the external area (A), and a second part (6b), which is in contact with the first internal area (Bi), **characterised in that** the face seal (5) comprises a pressure relieving device (15, 16, 17, 18), adapted to be arranged in the second part (6b) of the radial area, where it provides a pressure fall between the first internal area (B₁) and a zone (6b₁) in connection with said sealing elements (9, 13), so that a lower pressure is created in said zone (6b₁) in connection with the sealing elements (9, 13), than in the first internal area (B₁).

2. Face seal according to claim 1, **characterised in that** the pressure relieving device (15, 16, 17, 18) is comprised in the rotatable part (5b) of the face seal.

3. Face seal according to claim 1 or 2, **characterised in that** the pressure relieving device (15, 16, 17, 18) comprises a pressure relief ring (16, 18), which is arranged in an annular recess (15, 17) of the face seal.

4. Face seal according to claim 3, **characterised in that** the pressure relief ring (16) comprises a surface (16c), which is adapted to abut with a pressure against a wall surface (15b) of the annular recess (15), so that a passage, in which a medium obtains a pressure fall, is created between said surfaces (15b, 16c).

5. Face seal according to claim 3 or 4, **characterised in that** the pressure relief ring (16, 18) has a radial external surface (16a), adapted to abut with a pressure against the internal surface (7), which defines the through hole in the house (1) and a radial internal surface (16b), which is adapted to be located at a column shaped distance from a bottom surface (15a) of the radial recess (15).

6. Face seal according to any of claims 3 to 5, **characterised in that** the pressure relief ring (16, 18) is pre-fitted in the annular recess (15, 17).

7. Face seal according to any of claims 3 to 6, **characterised in that** the pressure relief ring (16, 18) is made of a rigid material.

8. Face seal according to any of the previous claims, **characterised in that** one of the parts of the face seal (5a) comprises a moveably arranged sealing element (9), and a spring element (10) adapted to press the moveably arranged sealing element (9) towards the sealing element (13) in the remaining part of the face seal.

9. Face seal according to claim 8, **characterised in that** said part (5a) of the face seal comprises a sealing element (11), which prevents leakage in connection with the moveably arranged sealing element (9).

10. Face seal according to any of the previous claims, **characterised in that** a part of the face seal (5 a) comprises a fixing material for attachment of the sealing element (9).

11. Unit comprising a house, a rotatable shaft extending through a through hole in the house, and a radial area between the rotatable shaft and an internal surface defining the through hole in the house, extending between an area (A) located outside of the house (1), and a first internal area (B₁) of the house (1), where a higher pressure prevails than in said external area (A), **characterised in that** said radial area comprises a face seal according to any of the previous claims.

12. Unit according to claim 11, **characterised in that** it comprises a passage (20), adapted to connect said zone (6bi), arranged in connection with said sealing element (9, 13), with a second internal area (B₂) in the house (1), where a lower pressure prevails than in the first internal area (B₁).

## Patentansprüche

1. Gleitringdichtung zum Abdichten eines radialen Bereichs (6) zwischen einer drehbaren Welle (2) und einer innenliegenden Oberfläche (7), die ein Durchgangsloch in einem Gehäuse (1) definiert, wobei sich der radiale Bereich (6) von einem Bereich (A), der außerhalb des Gehäuses (1) angeordnet ist, zu einem ersten innenliegenden Bereich (B₁) in dem Gehäuse (1) erstreckt, in dem ein höherer Druck als in dem außenliegenden Bereich (A) herrscht, wobei die Gleitringdichtung (5) ein statisches Teil (5a) umfasst, das dazu eingerichtet ist, an der innenliegenden Oberfläche (7) angebracht zu werden, und umfassend ein erstes Dichtelement (9), und ein drehbares Teil (5b), das dazu eingerichtet ist, an der Welle (2) angebracht zu werden, und umfassend ein zweites Dichtelement (13), wobei die Dichtelemente (9, 13) dazu eingerichtet sind, gegeneinander in einer Position anzuliegen, in der sie den radialen Bereich (6) in einen ersten Teil (6a), der in Kontakt mit dem externen Bereich (A) ist, und einen zweiten Teil (6b) teilen, der in Kontakt mit dem ersten innenliegenden Bereich (B₁) ist, **dadurch gekennzeichnet, dass** die Gleitringdichtung (5) eine Druckentlastungsvorrichtung (15, 16, 17, 18) umfasst, die dazu eingerichtet ist, in dem zweiten Teil (6b) des radialen Bereichs angeordnet zu sein, in dem es zu einem Druckabfall zwischen dem ersten innenliegenden Bereich (B₁) und einer Zone (6b₁) kommt, die in Verbindung mit den Dichtelementen (9, 13) ist, sodass ein niedrigerer Druck in der Zone (6b₁) erzeugt wird, die in Verbindung mit den Dichtelementen (9, 13) ist, als in dem ersten innenliegenden Bereich (B₁).

2. Gleitringdichtung nach Anspruch 1, **dadurch gekennzeichnet, dass** die Druckentlastungsvorrichtung (15, 16, 17, 18) in dem drehbaren Teil (5b) der Gleitringdichtung erfasst ist.

3. Gleitringdichtung nach Anspruch 1 oder 2, **dadurch gekennzeichnet, dass** die Druckentlastungsvorrichtung (15, 16, 17, 18) einen Druckentlastungsring (16, 18) umfasst, der in einer ringförmigen Aussparung (15, 17) der Gleitringdichtung angeordnet ist.

4. Gleitringdichtung nach Anspruch 3, **dadurch gekennzeichnet, dass** der Druckentlastungsring (16) eine Oberfläche (16c) umfasst, die dazu eingerichtet ist, mit einem Druck gegen eine Wandoberfläche (15b) der ringförmigen Aussparung (15) anzuliegen, sodass eine Passage, in der ein Medium einen Druckabfall erfährt, zwischen den Oberflächen (15b, 16c) erzeugt wird.

5. Gleitringdichtung nach Anspruch 3 oder 4, **dadurch gekennzeichnet, dass** der Druckentlastungsring (16, 18) eine radial außenliegende Oberfläche (16a) aufweist, die dazu eingerichtet ist, mit einem Druck gegen die innenliegende Oberfläche (7) anzuliegen, welche das Durchgangsloch in dem Gehäuse (1) und eine radial innenliegende Oberfläche (16b) definiert, die dazu eingerichtet ist, in einem säulenförmigen Abstand einer Bodenfläche (15a) der radialen Aussparung (15) angeordnet zu sein.

6. Gleitringdichtung nach einem der Ansprüche 3 bis 5, **dadurch gekennzeichnet, dass** der Druckentlastungsring (16, 18) in der ringförmigen Aussparung vormontiert ist.

7. Gleitringdichtung nach einem der Ansprüche 3 bis 6, **dadurch gekennzeichnet, dass** der Druckentlastungsring (16, 18) aus einem harten Material besteht.

8. Gleitringdichtung nach einem der vorhergehenden Ansprüche, **dadurch gekennzeichnet, dass** eines der Teile der Gleitringdichtung (5a) ein beweglich angeordnetes Dichtelement (9) umfasst, und ein Federelement (10), das dazu eingerichtet ist, das beweglich angeordnete Dichtelement (9) gegen das Dichtelement (13) in dem übrigen Teil der Gleitringdichtung zu drücken.

9. Gleitringdichtung nach Anspruch 8, **dadurch gekennzeichnet, dass** das Teil (5a) der Gleitringdichtung ein Dichtelement (11) umfasst, das eine Leckage in Verbindung mit dem beweglich angeordneten Dichtelement (9) verhindert.

10. Gleitringdichtung nach einem der vorhergehenden Ansprüche, **dadurch gekennzeichnet, dass** ein Teil der Gleitringdichtung (5a) ein Befestigungsmaterial zum Anbringen des Dichtelements (9) umfasst.

11. Einheit, umfassend ein Gehäuse, eine drehbare Welle, die sich durch ein Durchgangsloch in dem Gehäuse erstreckt, einen radialen Bereich zwischen der drehbaren Welle und einer innen liegenden Oberfläche, die das Durchgangsloch in dem Gehäuse definiert, der sich zwischen einem Bereich (A), der außerhalb des Gehäuses (1) angeordnet ist, und einem ersten innenliegenden Bereich (B₁) des Gehäuses (1) erstreckt, in dem ein höherer Druck als in dem außenliegenden Bereich (A) vorherrscht, **dadurch gekennzeichnet, dass** der radiale Bereich eine Gleitringdichtung nach einem der vorhergehenden Ansprüche umfasst.

12. Einheit nach Anspruch 11, **dadurch gekennzeichnet, dass** sie eine Passage (20) umfasst, die dazu eingerichtet ist, die Zone (6b₁), die derart angeordnet ist, dass sie in Verbindung mit dem Dichtelement (9, 13) ist, mit einem zweiten innenliegenden Bereich (B₂) in dem Gehäuse (1) zu verbinden, in dem ein niedrigerer Druck als in dem ersten innenliegenden Bereich (B₁) vorherrscht.

## Revendications

1. Joint mécanique pour étanchéifier une zone radiale (6) entre un arbre rotatif (2) et une surface interne (7), qui définit un trou traversant dans une enveloppe (1), dans lequel ladite zone radiale (6) s'étend depuis une zone (A) située à l'extérieur de l'enveloppe (1) vers une première zone interne (B₁) dans l'enveloppe (1), où règne une pression plus élevée que dans la zone externe (A), où le joint mécanique (5) comprend une partie statique (5a) adaptée pour être fixée à ladite surface interne (7), et comprenant un premier élément d'étanchéité (9), et une partie rotative (5b) adaptée pour être fixée à l'arbre (2) et comprenant un second élément d'étanchéité (13), où lesdits éléments d'étanchéité (9, 13) sont adaptés pour buter l'un contre l'autre dans une position dans laquelle ils divisent ladite zone radiale (6) en une première partie (6a), qui est en contact avec la zone externe (A), et en une seconde partie (6b), qui est en contact avec la première zone interne (B₁), **caractérisé en ce que** le joint mécanique (5) comprend un dispositif de décompression (15, 16, 17, 18), adapté pour être disposé dans la seconde partie (6b) de la zone radiale, où il fournit une chute de pression entre la première zone interne (B₁) et une zone (6b₁) en liaison avec lesdits éléments d'étanchéité (9, 13), de sorte qu'une pression plus faible soit créée dans ladite zone (6b₁) en liaison avec les éléments d'étanchéité (9, 13), plutôt que dans la première zone interne (B₁).

2. Joint mécanique selon la revendication 1, **caractérisé en ce que** le dispositif de décompression (15, 16, 17, 18) est compris dans la partie rotative (5b) du joint mécanique.

3. Joint mécanique selon la revendication 1 ou 2, **caractérisé en ce que** le dispositif de décompression (15, 16, 17, 18) comprend un anneau de décompression (16, 18) disposé dans un évidement annulaire (15, 17) du joint mécanique.

4. Joint mécanique selon la revendication 3, **caractérisé en ce que** l'anneau de décompression (16) comprend une surface (16c) adaptée pour buter contre une surface de paroi (15b) de l'évidement annulaire (15), de manière à créer un passage dans lequel un fluide connaît une chute de pression, entre lesdites surfaces (15b, 16c).

5. Joint mécanique selon la revendication 3 ou 4, **caractérisé en ce que** l'anneau de décompression (16, 18) présente une surface externe radiale (16a), adaptée pour buter contre la surface interne (7), qui définit le trou traversant dans l'enveloppe (1) et une surface interne radiale (16b), qui est adaptée pour être située à une distance en forme de colonne d'une surface inférieure (15a) de l'évidement radial (15).

6. Joint mécanique selon l'une des revendications 3 à 5, **caractérisé en ce que** l'anneau de décompression (16, 18) est prémonté dans l'évidement annulaire (15, 17).

7. Joint d'étanchéité selon l'une quelconque des revendications 3 à 6, **caractérisé en ce que** l'anneau de décompression (16, 18) est constitué d'un matériau rigide.

8. Joint mécanique selon l'une quelconque des revendications précédentes, **caractérisé en ce que** l'une des parties du joint mécanique (5a) comprend un élément d'étanchéité agencé de façon mobile (9) et un élément ressort (10) adapté pour presser l'élément d'étanchéité agencé de façon mobile (9) vers l'élément d'étanchéité (13) dans la partie restante du joint mécanique.

9. Joint mécanique selon la revendication 8, **caractérisé en ce que** ladite partie (5a) du joint mécanique comprend un élément d'étanchéité (11) qui empêche les fuites en liaison avec l'élément d'étanchéité agencé de façon mobile (9) .

10. Joint mécanique selon l'une quelconque des revendications précédentes, **caractérisé en ce que** partie du joint mécanique (5a) comprend un matériau de fixation pour la fixation de l'élément d'étanchéité (9).

11. Unité comprenant une enveloppe, un arbre rotatif traversant un trou traversant dans l'enveloppe et une zone radiale située entre l'arbre rotatif et une surface interne définissant le trou traversant dans l'enveloppe, s'étendant entre une zone (A) située à l'extérieur de l'enveloppe (1) et une première zone interne (B₁) de l'enveloppe (1), où règne une pression plus élevée que dans ladite zone externe (A), **caractérisée en ce que** ladite zone radiale comprend un joint mécanique selon l'une quelconque des revendications précédentes.

12. Unité selon la revendication 11, **caractérisée en ce qu'**elle comprend un passage (20), adapté pour relier ladite zone (6b₁), agencé en liaison avec ledit élément d'étanchéité (9, 13), avec une seconde zone interne (B₂) dans l'enveloppe (1), où règne une pression inférieure à celle de la première zone interne (B₁).
